# EUROPEAN PATENT APPLICATION

(11) **EP 1 160 557 A2**
(43) Date of publication of application: **05.12.2001**
(21) Application number: 01112187.8
(22) Date of filing: 18.05.2001
(51) Int. Cl.: G01L 5/10

(54) **A sensor of traction force acting on a longitudinal formation, in particular on textile threads**

(30) Priority: 29.05.2000 CZ 20001976
(71) Applicant: Vùts, Liberec a.s., 461 19 Liberec (CZ)
(72) Inventor: Skop, Petr, 460 06 Liberec (CZ); Sidlof, Pavel, 460 14 Liberec (CZ)
(74) Representative: Bergmeier, Werner, Dipl.-Ing.

(57) **Abstract**

The invention relates to a sensor of traction force acting on a longitudinal formation, in particular on textile threads which comprises a deformational measuring element (3) consisting of a longitudinal body with a transverse through hole (30), fitted with means for registering the deformations of the deformational measuring element and adapted to be connected with an evaluation device, the deformational measuring element (3) being in the region of one of its ends seated in a holder (1) fitted with side guides (2) of the longitudinal formation while the deformational measuring element (3) is fitted with a middle guide (32) of the longitudinal formation. The holder (1) and the deformational measuring element (3) consist of flat bodies, the deformational measuring element (3) is situated in the plane of the holder (1) in the direction of the length of the holder (1). At least on one lateral side of the sensor there is in the deformational measuring element (3) seated a middle guide (32) of the longitudinal formation in parallel with the axis of the transverse through hole (30) provided in the deformational measuring element (3) and on the same lateral side of the sensor there are seated in the holder (1) side guides (2) of the longitudinal formation situated in parallel with the middle guide (32) of the longitudinal formation on mutually opposite sides from the middle guide of the longitudinal formation.

## Description

### Technical field

The invention relates to a sensor of traction force acting on a longitudinal formation, in particular on textile threads which comprises a deformational measuring element consisting of a longitudinal body with a transverse through hole, fitted with means for registering the deformations of the deformational measuring element and adapted to be connected with an evaluation device, the deformational measuring element being in the region of one of its ends seated in a holder fitted with side guides of the longitudinal formation while the deformational measuring element is fitted with a middle guide of the longitudinal formation.

### Background art

There are known many types of sensors of traction force acting on a longitudinal formation, in particular on textile threads, comprising a deformational measuring element consisting of a fixed-end beam fitted at its free end with a middle guide of the longitudinal formation.

The drawback of these sensors of traction force acting on a longitudinal formation, in particular on textile threads, consists in their limited natural frequency due exactly to the fixed-beam type of the deformational measuring element which renders such sensors unusable for measuring the course of the traction force of the measured longitudinal formation with high dynamics.

This drawback has been removed by a sensor of traction force acting on a longitudinal formation comprising a holder made as a longitudinal body with a bottom and with a pair of side walls while the front, rear, and upper side are open. In the side walls of the holders are seated the two ends of the side guide of the longitudinal formation made as cylindrical bodies. Seated on the bottom of the holder is one end of the deformational measuring element made as a longitudinal metallic prism featuring a transverse shaped cavity situated in the length direction of the side guides of the longitudinal formation, the deformational measuring element being situated with its length in the longitudinal direction of the holder. The other end of the deformational measuring element is situated between the side guides of the longitudinal formation and carries the central part of the holder of the middle guide of the longitudinal formation situated with its length in the direction of the guides of the longitudinal formation. The holder of the middle guide of the longitudinal formation comprises a pair of arms whose ends are situated each at one of the two side walls. In each of these two ends is with one of its ends seated the middle guide of the longitudinal formation which is parallel with the side guides of the longitudinal formation. In this way, the ends of the middle guide of the longitudinal formation are situated near the side walls of the holder. One side wall of the holder ist fitted with a through groove which divides it into two sections and which is in the length direction of the holder from one of its ends to the other of its ends situated first at a level below the first side guide of the longitudinal formation, then in the region of the middle guide of the longitudinal formation (is situated) above the middle guide of the longitudinal formation, and in the region of the other side guide of the longitudinal formation is situated at a level below said other side guide of the longitudinal formation. The lower part of the side wall of the holder is seated on the bottom of the holder while the upper part of the side wall of the holder is seated on the opposite side wall by means of connecting pins. The through groove in one side wall permits the required alternating fitting of the longitudinal formation to be measured on the individual guides of the longitudinal formation in which the two side guides of the longitudinal formation are passed over by the longitudinal formation from below whereas the middle guide of the longitudinal formation is passed over by the longitudinal formation from above. The deformational measuring element is fitted with means for monitoring its deformation which are interconnected into a (measuring) bridge, their outlets being led by cables into a connector situated on the front wall of an additional section mounted on the undivided side wall at a level of the passage of the measured longitudinal formation into the inner space of the holder.

The drawback of this solution consists in the design of the sensor as a whole resulting in the rather difficult fitting of the longitudinal formation to be measured, especially if it consists of a whole system of textile threads situated next to each other, into the required position on the individual guides of the longitudinal formation. Another drawback of this sensor consists in the unsuitable position of the connector for attaching the deformation monitoring means of the deformational measuring element in particular for measuring a system of longitudinal formations situated next to each other, because the position of the connector requires the connecting cable to be led around the longitudinal formation to be measured which can cause defects on the object to be measured.

The goal of the invention is to create a reliable, efficient sensor of the traction force acting on the longitudinal formation, simple in production and in operation and adapted to be used easily and without modifications for the measuring of both single textile threads and of the whole systems consisting of single formations, for instance for measurements on the warp of a weaving machine.

### Principle of the invention

The goal of the invention has been achieved by a sensor of traction force acting on a longitudinal formation, in particular on textile threads, whose principle consists in that the holder and the deformational measuring element consist of flat bodies, that the deformational measuring element is situated in the plane of the holder in the direction of the length of the holder, that at least on one lateral side of the sensor there is in the deformational measuring element a middle guide of the longitudinal formation seated in parallel with the axis of a transverse through hole provided in the deformational measuring element and that on the same lateral side of the sensor there are seated in the holder side guides of the longitudinal formation situated in parallel with the middle guide of the longitudinal formation on mutually opposite sides from the middle guide of the longitudinal formation.

The sensor of traction force acting on a longitudinal formation is simple in manufacture/production and is easily, efficiently and without additional modifications adapted to be used in various arrangements of the measurement of the traction force acting on a longitudinal formation. The effect is enhanced by the high natural frequency of the deformational measuring element that is in addition to this insensitive to additional moments acting on the deformational measuring element, and more exactly, on the one side to the torque generated by the friction force acting on the arm and equal to the radius of the middle guide of the longitudinal formation due to the friction between the moving longitudinal formation being measured and the middle guide of the longitudinal formation and, on the other side, to the bending moment due to the load exerted on the middle guide of the longitudinal formation by the transverse force generated by the resolution of the longitudinal force in the longitudinal formation in the triangle due to the fact that the longitudinal formation is alternately fitted on/around the individual guides of the longitudinal formation, said transverse force acting on the middle guide of the longitudinal formation in due distance from the deformational measuring element. The advantageous properties of the deformational measuring element, in particular its high natural frequency, render it suitable for measuring highly dynamic processes such as the course of the traction force acting on warp threads within a single weaving cycle and thus permits, for instance, to adjust the back rail (whip roll) more adequately and thus to obtain better weaving results.

In a preferred embodiment, the entire deformational measuring element is situated in the longitudinal through hole in the holder which through hole is on a part of its circumferential surface fitted with a distance member reaching into the space of the transverse through hole with which there is on a part of its circumferential wall on one of its terminal parts fixed the deformational measuring element while there is a gap between the remaining circumferential wall of the deformational measuring element and the remaining circumferential surface of the longitudinal through hole.

Due to this arrangement, the body of the sensor of traction force acting on a longitudinal formation is small in width and thus better adapted to be used in particular for measuring a whole system consisting of a considerable number of individual longitudinal formations due to the easier handling of the sensor when putting it into, and taking it out of, its operative position. At the same time, it reduces the risk of damaging some of the individual longitudinal formations of the measured system, for instance during the measurement on the warp of a weaving machine, where a rupture of but one single warp thread renders necessary the repair of the warp with the unavoidable putting of the weaving machine out of operation and the ensuing decrease in its productivity.

In the region of its fixation to the holder from its lateral side, the deformational measuring element is preferably fitted with a recess into which the cables belonging to all means for sensing the deformation value of the deformational measuring element are led and pass from it through the contact area of the deformational measuring element and holder into the holder body in which they are led into the connector for connecting these cables with the evaluating device seated in the holder.

This arrangement of the course of the cables for the means sensing the deformation of the deformational measuring element further improves the utility parameters of the deformational measuring element since it eliminates the influence exerted on the value of the deformation of the deformational measuring element by the traction force of the measured longitudinal formation due to the proper elasticity of the cables connecting the means for sensing the deformation of the deformational measuring element with the connector for connecting said cables with the evaluating device.

The connector for connecting the cables of all means for sensing the value of deformation of the deformational measuring element with the evaluating device is preferably situated on the upper side of the holder.

This arrangement of the connector for connecting the cables of all means for sensing the value of deformation of the deformational measuring element with the evaluating device is advantageous in that neither the connector nor the used connecting cable of the connector with the evaluating and/or registering device reaches close to the section of the holder in which the measured longitudinal formation lies so that neither the measured longitudinal formation nor the measurement as such is threatened by the connector or by the measurement proper.

Preferably, the deformational measuring element and the holder are fitted with the longitudinal formation guides from/on both lateral sides of the sensor.

This arrangement conveniently permits to carry out measurement on an increased width, for instance on a considerable number of warp threads of a weaving machine, without the need to use extremely long longitudinal formation guides so that the sensor remains easy to handle and easy to use.

The side guides of the longitudinal formation are preferably made as tube bodies passing through the holder and fixed in the holder by their central sections, while the middle guide of the longitudinal formation consists of a pair of bodies each of which is by one of its ends from one side of the sensor introduced into an auxiliary hole in the deformational measuring element and which are connected by a bolted connection.

This embodiment of the longitudinal formation guides is reliable and simple to manufacture.

The deformational measuring element is preferably made as a flat prism-shaped metallic plate, adapted to be fixed in the vicinity of one of its ends to the holder while the other of its ends is bevelled and at least from one lateral side of the sensor is there fitted with the middle guide of the longitudinal formation and the transverse through hole is made as a circular through hole.

The deformational measuring element arranged in this way is simple to manufacture, reliable and fully functional.

To improve the access to the sensor and its handling, the holder is on its upper side at a level above the longitudinal formation guides fitted with at least one through hole for grasping the sensor.

### Description of the drawings

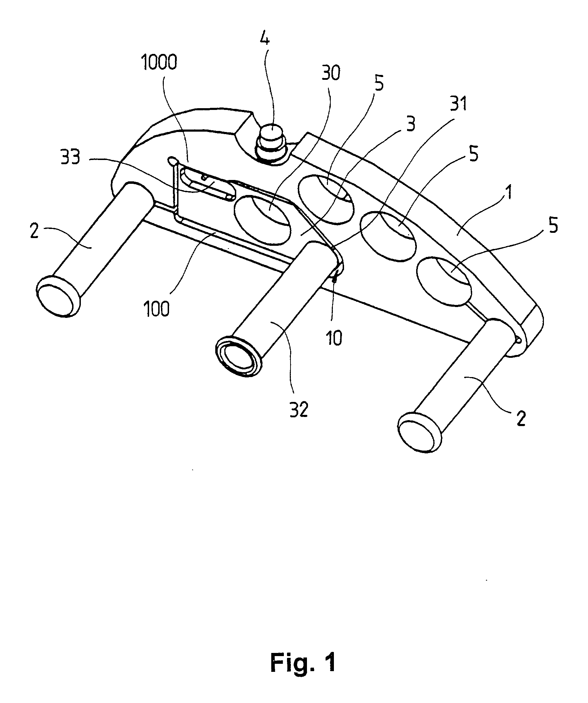

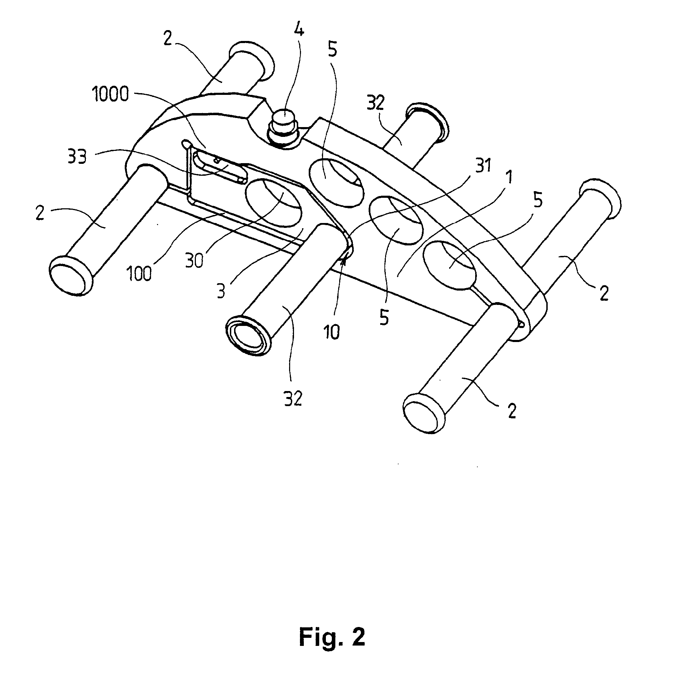

The invention is schematically shown in the drawing in which Fig. 1 shows the one-sided embodiment of the sensor of traction force acting on a longitudinal formation, in particular on textile threads, and Fig. 2 the double-sided embodiment of the sensor of traction force acting on a longitudinal formation, in particular on textile threads.

### Examples of embodiment

The sensor of traction force acting on a longitudinal formation, in particular on textile threads, consists of a flat body which is on one or on two lateral sides fitted with longitudinal formation guides.

The flat body contains a holder **1** made as an oblong flat body. Near the front and the rear end of the holder **1,** one side guide **2** of the longitudinal formation is situated on at least one lateral side of the holder **1** transversely to the plane of the holder **1.** In the examples of embodiment shown in Figs. 1 and 2, the side guides **2** are seated in a suitable clamping connection fitted with not represented bolts for ensuring the required clamping of the respective ends of the side guides **2** of the longitudinal formation. In a not represented example of embodiment, the side guides of the longitudinal formation are seated in the holder **1** in another suitable manner.

Seated in the holder **1** between the side guides **2** of the longitudinal formation is a deformational measuring element **3** consisting of a flat metallic body featuring a transverse through hole **30** and situated in the plane of the holder **1**. In the represented examples of embodiment, the entire deformational measuring element **3** is situated in a through hole **10** provided in the holder **1**.

The deformational measuring element **3** is with one part of its circumferential wall **31** in the region of one of its end parts fixed to a circumferential surface **100** of the longitudinal through hole **10** provided in the holder **1**. In the region of the other of its end parts, the deformational measuring element **3** is from the same side as from which are on the holder **1** situated side guides **2** of the longitudinal formation equipped with a middle guide **32** of the longitudinal formation seated with one of its ends in the deformational measuring element **3** transversely to the plane of the deformational measuring element **3.** In the represented examples of embodiment, the circumferential surface **100** of the longitudinal through hole **10** in the holder **1** is in the place of fixing of the deformational measuring element **3** fitted with a distance member **1000** to which the deformational measuring element **3** is fixed by its circumferential wall **31.** Between the circumferential wall **31** of the deformational measuring element **3** and the circumferential surface **100** of the longitudinal through hole **10** in the holder **1** there is a gap outside the contact area of the two members **1**, **3** in which the two members **1**, **3** come to lie on each other. In the represented examples of embodiment, the deformational measuring element **3** is at its end with the middle guide **32** of the longitudinal formation from its upper side bevelled, and the middle guide **32** of the longitudinal formation is seated in the lower section of this end part of the deformational measuring element **3** while the transverse through hole **30** in the deformational measuring element **3** is made as a circular through hole.

As is shown in Fig. 1, the sensor of traction force acting on a longitudinal formation is fitted with the guides **2, 32** on one of its lateral sides, each of the guides **2, 32** being seated in the holder **1** with one of its ends. The side guides **2** of the longitudinal formation are fixed in the holder **1** for instance by means of an adequate clamping connection. The middle guide **32** of the longitudinal formation can be seated in the deformational measuring element for instance by being inserted in an auxiliary hole provided in the deformational measuring element **3** and is fitted with a fixing bolt with the head on the other side of the sensor. In other examples of embodiment, the guides **2, 32** of the longitudinal formation can be seated in the sensor in another suitable way.

As is shown in Fig. 2, the sensor of traction force acting on a longitudinal formation is equipped with the guides **2, 32** on each of its two lateral sides. In this example of embodiment, the side guides **2** of the longitudinal formation consist of tube-shaped bodies passing through the holder **1** and are fixed in the holder **1** by their central part for instance by means of suitable clamping connections, the middle guide **32** of the longitudinal formation consisting of a couple of tube-shaped bodies each of which is with one of its ends inserted from its own side in an auxiliary hole provided in the deformational measuring element **3** and which are connected by a removable joint, for instance by a screw joint which can be made for instance by providing a male thread on one of the bodies and a corresponding female thread on the other body. In another example of embodiment, the guides **2, 32** of the longitudinal formation as well as their seating in the sensor and possible connection of the individual parts constituting the middle guide **32** of the longitudinal formation can be made in another suitable manner.

The deformational measuring element **3** is equipped with means for monitoring its deformation consisting as a rule of suitable tensometer types. The means for monitoring the deformation of the deformational measuring element **3** are situated on the upper and lower parts of the circumferential wall **31** of the deformational measuring element **3** and along the axis of the transverse through hole **30** provided in the deformational measuring element **3,** and are interconnected by suitable cables into a well-known (measuring) bridge. They are also fitted with cables leading the signal generated by the means for monitoring the deformation of the deformational measuring element **3** into the connector **4** situated in the shown examples of embodiment on the upper surface of the holder **1** and adapted to receive a cable for transmitting to the evaluating and/or registering device the signal received from the means for registering the deformation of the deformational measuring element. In the shown examples of embodiment, the deformational measuring element **3** is at a level below the position where it is fixed to the holder **1** fitted with a recess **33** receiving the cables connecting the means for monitoring the deformation of the deformational measuring element **3** with the connector **4,** said cables passing through the place of contact of the deformational measuring element **3** and the holder **1** into a not represented channel provided in the holder **1** through which they are led into the connector **4.**

To maximize the transverse force acting on the middle guide **32** of the longitudinal formation by the force resolution by means of the guides **2, 32,** the middle guide **32** of the longitudinal formation is equally distant from each of the two side guides **2** of the longitudinal formation.

In the shown examples of embodiment, the guides **2, 32** of the longitudinal formation consist of cylindrical bodies whose cylindrical surface constitutes the leading surface of the measured longitudinal formation. In a not represented example of embodiment, the guides **2, 32** of the longitudinal formation consist of bodies of another suitable cross section. The cross section of the middle guide **32** of the longitudinal formation can be different from the cross section of the side guides **2** of the longitudinal formation.

For easier grasping and handling of the sensor of traction force acting on a longitudinal formation in all situations and positions, the holder **1** is on its upper side at a level above the guides **2, 32** equipped with at least one grasping through hole **5.**

### Industrial applicability

The sensor of traction force acting on a longitudinal formation, in particular on textile threads, is applicable for measuring traction forces acting on all types of longitudinal formations such as straps, on individual formations (individual textile threads, wires etc.) , on systems consisting of a plurality of individual formations (such as a warp of a weaving machine), for measuring in warping and sizing, etc.

## Claims

1. A sensor of traction force acting on a longitudinal formation, in particular on textile threads which comprises a deformational measuring element consisting of a longitudinal body with a transverse through hole, fitted with means for registering the deformations of the deformational measuring element and adapted to be connected with an evaluation device, the deformational measuring element being in the region of one of its ends seated in a holder fitted with side guides of the longitudinal formation while the deformational measuring element is fitted with a middle guide of the longitudinal formation, **characterized by** that the holder (1) and the deformational measuring element (3) consist of flat bodies, that the deformational measuring element (3) is situated in the plane of the holder (1) in the direction of the length of the holder (1), that at least on one lateral side of the sensor there is in the deformational measuring element (3) a middle guide (32) of the longitudinal formation seated in parallel with the axis of the transverse through hole (30) provided in the deformational measuring element (3 and that on the same lateral side of the sensor there are seated in the holder (1) side guides (2) of the longitudinal formation situated in parallel with the middle guide (32) of the longitudinal formation on mutually opposite sides from the middle guide (32) of the longitudinal formation.

2. A sensor as claimed in Claim 1, **characterized by** that the entire deformational measuring element (3) is situated in the longitudinal through hole (10) in the holder (1) which through hole (10) is on a part of its circumferential surface (100) fitted with a distance member (1000) reaching into the space of the transverse through hole (10) with which there is on a part of its circumferential wall (31) on one of its terminal parts fixed the deformational measuring element (3) while there is a gap between the remaining part of the circumferential wall (31) of the deformational measuring element and the remaining part of the circumferential surface (100) of the longitudinal through hole (10).

3. A sensor as claimed in any of Claims 1 and 2, **characterized by** that the deformational measuring element (3) is in the region of its fixation to the holder (1) from/on its lateral side fitted with a recess (33) into which the cables belonging to all means for sensing the deformation value of the deformational measuring element(3) are led and pass from said recess (33) through the contact area of the deformational measuring element (3) and holder (1) into the body of the holder (1) in which they are led into the connector (4) for connecting said cables with the evaluating device seated on the holder (1).

4. A sensor as claimed in Claim 3, **characterized by** that the connector (4) for connecting the cables of all means for sensing the value of deformation of the deformational measuring element (3) with the evaluating device is situated on the upper side of the holder (1).

5. A sensor as claimed in any of Claims 1 to 4, **characterized by** that the deformational measuring element (3) and the holder (1) are fitted with the longitudinal formation guides (2,32) from/on both lateral sides of the sensor.

6. A sensor as claimed in Claim 5, **characterized by** that the side guides (2) of the longitudinal formation are made as tube bodies passing through the holder (1) and fixed in the holder (1) by their central sections, while the middle guide (32) of the longitudinal formation consists of a couple of bodies each of which is by one of its ends from one side of the sensor introduced into an auxiliary hole in the deformational measuring element (3) and which are connected by a bolted connection.

7. A sensor as claimed in any of Claims 1 to 6, **characterized by** that the deformational measuring element (3) is made as a flat prism-shaped metallic plate, adapted to be fixed in the vicinity of one of its ends to the holder (1) while its other, opposite end is bevelled and at least from one lateral side of the sensor is here fitted with the middle guide (32) of the longitudinal formation, and the transverse through hole (30) is made as a circular through hole.

8. A sensor as claimed in any of Claims 1 to 7, **characterized by** that the holder (1) is on its upper side at a level above the longitudinal formation guides (2, 32) fitted with at least one through hole for grasping the sensor (5).
